# EUROPEAN PATENT SPECIFICATION

(11) **EP 0 390 980 B1**
(45) Date of publication and mention of the grant of the patent: **18.11.1993**
(21) Application number: 89200892.1
(22) Date of filing: 07.04.1989
(51) Int. Cl.: F03B 13/18

(54) **Device for obtaining energy from water**
Vorrichtung zum Nutzbarmachen von Wasserenergie
Appareil de conversion d'énergie hydraulique

(43) Date of publication of application: 10.10.1990
(73) Proprietor: Doleh, Zakaria Kalil, Dubai (AE)
(72) Inventor: Doleh, Zakaria Kalil, Dubai (AE)
(74) Representative: Hoijtink, Reinoud

(56) References cited:
- FR-A- 2 073 588
- FR-A- 2 509 800
- FR-A- 2 607 870
- NL-A- 7 711 485
- US-A- 4 108 579

## Description

Systems are known for obtaining energy from moving water, especially from sea waves. Mostly such systems are only feasible if a minimum wave height occurs. A very small wave height or a light swell mostly is insufficient to obtain a sufficient yield.

Systems to obtain energy from changes in the water level in sea or lakes are known for example from FR-A-2,607,870; FR-A-2,509,800 and FR-A-2,073,588.

It is the object of the invention to provide a device having such a yield that also energy contained in moving water with a very small wave height can be obtained.

This is achieved by providing a device for obtaining energy from water according to claim 1.

The device according to the invention utilises the swell as well as very high waves in obtaining energy. In a smooth sea with a light swell the floating element will move up and down together with the water level and during this movement the vertically movable piston element will reciproke up and down. In high waves the water will be supplied directly under the piston element and will drive said piston element in a vertically reciprocal movement. The yield is considerably increased if the apertures are connected to ducts inserting into the water. Through the ducts large volumes of water are supplied during high waves, which increases the upwardly directed force against the piston element.

Around the cylindrical member an annular winding of an electric generator is applied.

The invention is elucidated with the help of the drawings.

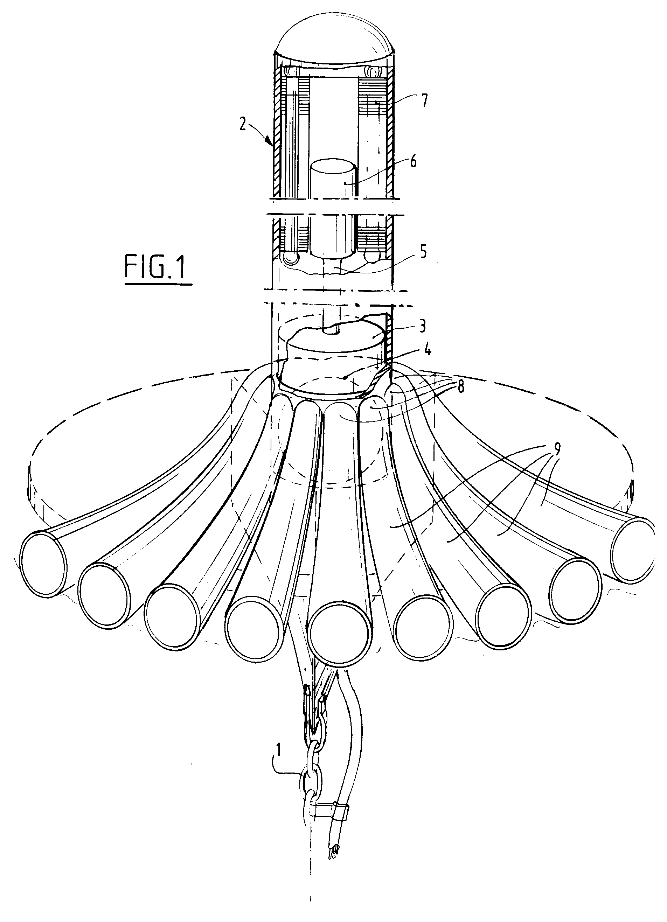

Figure 1 shows a isometric view of an embodiment of the device according to the invention,

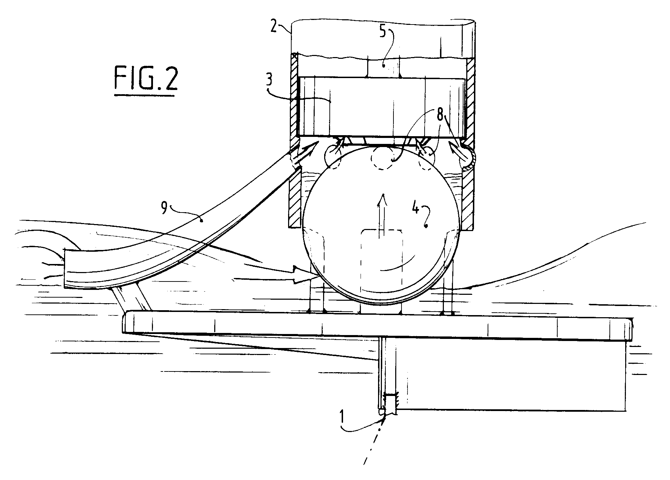

figure 2 shows a sectional view of the device according to figure 1, and
figure 3 shows an alternative embodiment in section.

Anchored by means of for example a chain 1 the cylindrical member 2 is vertically positioned. Within the cylindrical member a piston element 3 is vertically reciprocally movable. Spaced under the piston element a spherical floating member 4 is provided. By means of a piston rod 5 the piston is connected to a cylindrical magnetical element 6, which generates a voltage in a winding 7 which is annularly applied around the cylindrical member. The cylindrical member 2 is open at the underside. Due to the movement of the floating member 4 which moves with the swell, the piston 3 is pushed upwardly by means of the floating member 4 contacting the piston 3. Due to the weight of the piston 3 the piston moves downwardly so that a reciprocal movement is obtained. Through second apertures 8, which are connected to each a water supply duct 9, water is directly supplied to the cylinder 2 if there are high waves. The volume of water is directly applying to the piston 3 and moves the piston in upward direction. The operation of the floating member is of less importance under these circumstances.

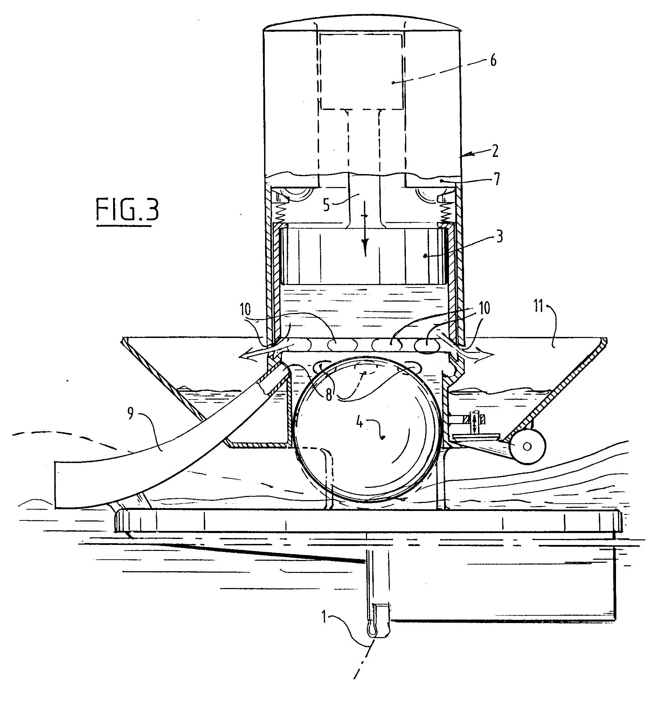

As shown in figure 3 apertures 10 are provided in the cylindrical wall which are connected to a reservoir 11. The water flowing back after a wave is therefore supplied to the reservoir 11. During a very smooth sea the water contained in the reservoir 11 can be used for driving an electrical generator.

## Claims

1. Device for obtaining energy from water, consisting of a cylindrical member (2) which is vertically positioned in water and open in the underside, a piston element (3) which is vertically reciprocally movable in said cylindrical member (2), a magnetic cylindrical element (6) mounted on the upper side of said piston element, a free floating member (4) provided vertically below said piston element (3), and apertures (8) between the piston element (3) and the floating member (4), whereby along the trajectory of said cylindrical element a winding (7) of an electrical generator for producing electrical energy is provided.

2. Device according to claim 1, characterised in that said apertures (8) are connected to ducts (9) inserted in water.

3. Device according to claims 1-2, characterised in that the floating member (4) is spherical.

4. Device according to claims 1-3, characterised in that apertures (8) are provided in the wall of the cylindrical member.

5. Device according to claims 1-4, characterised in that apertures (10) are provided in the wall of the cylindrical member being connected to a reservoir (9).

## Patentansprüche

1. Einrichtung zum Gewinnen von Energie aus Wasser, bestehend aus einem zylindrischen Teil (2), das vertikal im Wasser angeordnet und an der Unterseite offen ist, aus einem Kolbenelement (3), das in dem zylindrischen Teil (2) vertikal hin- und herbewegbar ist, aus einem magnetischen zylindrischen Element (6), das an der Oberseite des Kolbenelements angebracht ist, aus einem freien schwimmenden Teil (4), das vertikal unter dem Kolbenelement (3) vorgesehen ist, und mit Öffnungen (8) zwischen dem Kolbenelement (3) und dem schwimmenden Teil (4), wobei entlang der Bewegungsbahn des zylindrischen Elements eine Wicklung (7) eines Elektro-Generators zum Erzeugen elektrischer Energie vorgesehen ist.

2. Einrichtung nach Anspruch 1, **dadurch gekennzeichnet**, daß die Öffnungen (8) an in Wasser eingesetzte Leitungen (9) angeschlossen sind.

3. Einrichtung nach Anspruch 1-2, **dadurch gekennzeichnet**, daß das schwimmende Teil (4) kugelförmig ist.

4. Einrichtung nach Anspruch 1-3, **dadurch gekennzeichnet**, daß die Öffnungen (8) in der Wand des zylindrischen Teils vorgesehen sind.

5. Einrichtung nach Anspruch 1-4, **dadurch gekennzeichnet**, daß Öffnungen (10) in der Wand des zylindrischen Teils vorgesehen sind, die mit einem Speicher (11) in Verbindung stehen.

## Revendications

1. Dispositif pour obtenir de l'énergie à partir de l'eau, comprenant un organe cylindrique (2) positionné verticalement dans de l'eau et ouvert dans son dessous, un élément formant piston (3) déplaçable verticalement suivant un mouvement alternatif dans l'organe cylindrique (2), un élément cylindrique magnétique (6) monté sur le dessus de l'élément formant piston, un organe libre flottant (4) disposé verticalement en dessous de l'élément (3) formant piston, et des ouvertures (8) ménagées entre l'élément (3) formant piston et l'organe flottant (4), dans lequel il est prévu, le long de la trajectoire de l'élément cylindrique, un enroulement (7) d'un générateur électrique destiné à produire de l'énergie électrique.

2. Dispositif selon la revendication 1, caractérisé en ce que les ouvertures (8) sont raccordées à des conduits (9) insérés dans le l'eau.

3. Dispositif selon les revendications 1-2, caractérisé en ce que l'organe flottant (4) est sphérique.

4. Dispositif selon les revendications 1-3, caractérisé en ce que les ouvertures (8) sont ménagées dans la paroi de l'organe cylindrique.

5. Dispositif selon les revendications 1-4, caractérisé en ce que des ouvertures (10) sont ménagées dans la paroi de l'organe cylindrique en étant raccordées à un réservoir (9).
